# FASCICULE DE BREVET EUROPEEN

(11) **EP 3 007 331 B1**
(45) Date de publication et mention de la délivrance du brevet: **07.06.2023**
(21) Numéro de dépôt: 15179356.9
(22) Date de dépôt: 31.07.2015
(51) Int. Cl.: H02K 5/15, H02K 5/173, H02K 15/00, H02K 15/14

(54) **MOTEUR ÉLECTRIQUE ET PROCÉDÉ DE DÉMONTAGE ET REMONTAGE**
ELEKTROMOTOR UND SEIN DEMONTAGE- UND ZUSAMMENBAUVERFAHREN
ELECTRIC MOTOR AND DISASSEMBLING ET REASSEMBLING METHOD

(30) Priorité: 01.08.2014 FR 1457507
(43) Date de publication de la demande: 13.04.2016
(73) Titulaire: ALSTOM Transport Technologies, 93400 Saint-Ouen (FR)
(72) Inventeur: RAGUIN, Bruno, 25720 BEURE (FR); PERRIAU, Jean-François, 25000 BESANCON (FR); COUTURIER, Alain, 25000 BESANCON (FR)
(74) Mandataire: Lavoix

(56) Documents cités:
- WO-A2-2008/022108
- US-A1- 2006 226 717
- US-A1- 2012 212 086

## Description

La présente invention concerne un moteur électrique du type comportant : un carter disposé selon un axe principal, comprenant une paroi latérale et des parois d'extrémité disposées sensiblement transversalement à l'axe principal ; un ensemble rotor-stator, le stator étant solidaire du carter ; un arbre de sortie solidaire du rotor, coaxial au carter selon l'axe principal ; et deux paliers montés entre l'arbre et les parois d'extrémité du carter pour maintenir l'arbre libre en rotation par rapport au carter autour de l'axe principal ; le rotor comprenant une première surface radiale et le carter comprenant une deuxième surface radiale, les deux surfaces étant aptes à coopérer pour retenir radialement le rotor par rapport au carter.

Des moteurs électriques similaires sont notamment décrits dans les documents WO2008022108, US2006/226717 et US2012212086.

Les paliers à roulement des moteurs électriques nécessitent un entretien régulier, tel qu'un renouvellement de la graisse lubrifiante ou un changement de pièces de roulement usées. Pour limiter les opérations de manutention, il est souhaitable d'extraire les paliers depuis l'extérieur du moteur sans démonter le rotor. Il est alors nécessaire de bloquer radialement le rotor dans le carter afin de le conserver en position coaxiale avec le stator durant les opérations de démontage/remontage des paliers.

Le document EP2738529 décrit un moteur électrique du type précité, comprenant des surfaces coniques solidaires de l'arbre de sortie et disposées dans le carter, de part et d'autre du rotor selon l'axe principal. Des vis disposées axialement dans les parois d'extrémité du carter peuvent être mises au contact desdites surfaces coniques, afin de bloquer axialement et radialement le rotor par rapport au carter durant les opérations de maintenance des paliers.

La fabrication de ces surfaces coniques, très spécifiques, implique toutefois un coût supplémentaire dans la réalisation du moteur.

La présente invention a pour but de permettre le blocage radial du rotor par rapport au carter par des modifications simples et économiques des dispositifs existants.

A cet effet, l'invention a pour objet un moteur électrique du type précité, tel que défini dans la revendication 1.

Suivant des modes particuliers de réalisation, le moteur comporte l'une ou plusieurs des caractéristiques suivantes, prises isolément ou suivant toutes les combinaisons techniques possibles :
- Le moteur comporte un moyen de blocage axial de l'arbre de sortie par rapport au carter ;
- Le rotor comprend une cinquième surface disposée transversalement à l'axe principal, le carter comprend une sixième surface disposée transversalement à l'axe principal, le moteur électrique étant configuré de sorte que les première et deuxième surfaces radiales ainsi que les troisième et quatrième surfaces radiales soient au contact l'une de l'autre lorsque les cinquième et sixième surfaces sont en butée.

L'invention a également pour objet un procédé de montage/démontage d'un palier d'un moteur électrique tel que décrit ci-dessus, ledit procédé étant défini par la revendication 4.

Suivant des modes particuliers de réalisation, le procédé comporte l'une ou plusieurs des caractéristiques suivantes, prises isolément ou suivant toutes les combinaisons techniques possibles :
- Le déplacement de l'arbre selon l'axe principal vient mettre en butée la cinquième et la sixième surfaces, de sorte à bloquer axialement le rotor par rapport au carter ;
- Le procédé comprend l'extraction du premier palier vers l'extérieur du carter ; et comprend au préalable un démontage de la première paroi d'extrémité par rapport à la paroi latérale du carter ;
- Le procédé comprend ensuite les étapes suivantes : montage d'un palier sur l'arbre de sortie à l'emplacement du ou de chaque palier extrait ; déplacement de l'arbre de sortie sur la course en translation selon l'axe principal, de manière à écarter l'une de l'autre les première et deuxième surfaces et les troisième et quatrième surfaces et à mettre l'ensemble rotor-stator en position de fonctionnement ; et montage du moyen de blocage axial de l'arbre de sortie par rapport au carter.

L'invention sera mieux comprise à la lecture de la description qui va suivre, donnée uniquement à titre d'exemple et faite en se référant aux dessins sur lesquels :
- la figure 1 est une vue en section axiale d'un moteur électrique selon un mode de réalisation de l'invention ;
- la figure 2 est une vue de détail de la figure 1 ;
- la figure 3 est une vue en section axiale du moteur de la figure 1 dans une étape d'un procédé de démontage selon un mode de réalisation de l'invention ; et
- la figure 4 est une vue en section axiale du moteur de la figure 1 dans une autre étape dudit procédé de démontage.

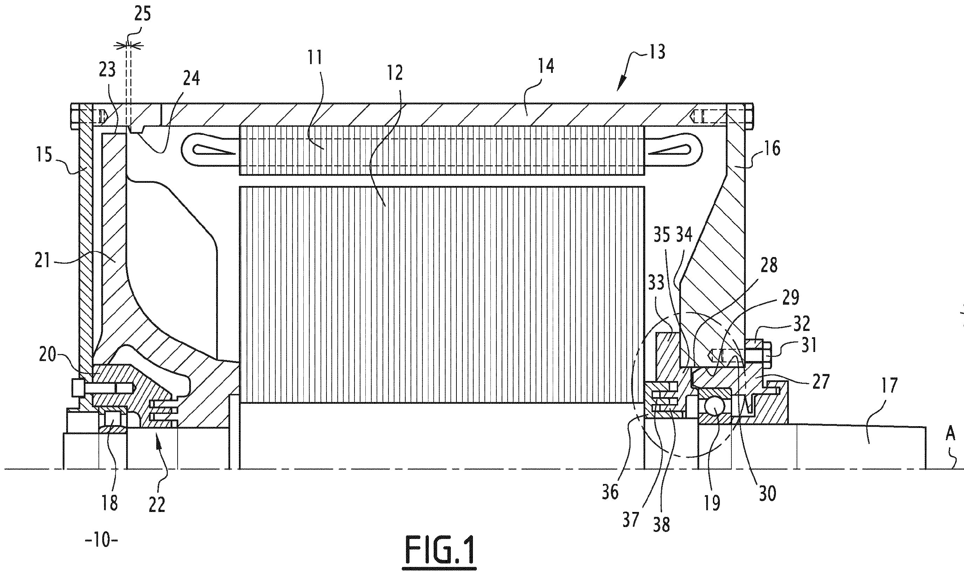

Un moteur 10 électrique représenté à la figure 1 comporte un stator 11 et un rotor 12 disposés coaxialement le long d'un axe principal A. Dans l'exemple des figures 1 à 4, l'axe A est horizontal et seule la partie du moteur 10 située au-dessus de l'axe A est représentée.

L'ensemble rotor 12 / stator 11 est représenté en position de fonctionnement du moteur. Le stator 11 est tubulaire et le rotor 12, cylindrique, est logé à l'intérieur du stator. L'ensemble rotor 12 / stator 11 est logé dans un carter 13, qui comporte une paroi 14 latérale sensiblement cylindrique disposée selon l'axe A. Le stator 11 est solidaire d'une surface interne de la paroi 14 latérale. Le carter comporte également des parois d'extrémité 15, 16, également appelés flasques, disposés sensiblement transversalement à l'axe A. Chacun des flasques 15, 16 est relié à une extrémité de la paroi 14.

En variante non représentée, la paroi 14 comporte un ensemble mécano-soudé comprenant un ensemble de tôles formant le stator 11 et des éléments de carcasse, de type plaque ou caisson moulé, à chaque extrémité de l'ensemble de tôles et reliés entre eux par des barreaux soudés.

Un arbre 17 de sortie, solidaire du rotor 12, est disposé selon l'axe A et fait saillie hors du carter du côté d'au moins un flasque 16. La mobilité en rotation selon l'axe A de l'arbre 17 par rapport au carter 13 est assurée par des paliers 18, 19 à roulements. Chacun des paliers 18, 19 est disposé entre l'arbre 17 et un flasque 15, 16 du carter 13.

Dans l'exemple de la figure 1, un premier palier 18 est à roulement à rouleaux. Le palier 18 est monté entre l'arbre 17 et une première cage 20 annulaire, fixée à un premier flasque 15 et retenant le palier 18. La première cage 20 est également appelée boîtier de palier ou boîtier de roulement.

Une roue 21 de ventilation est montée sur l'arbre 17 entre le rotor 12 et la première cage 20. La première cage 20 et la roue 21 coopèrent pour former un dispositif 22 d'isolement du premier palier 18 par rapport au rotor. Le dispositif 22 comporte un ensemble de bagues coaxiales selon l'axe A. Une première série de bagues, portée par la première cage 20, est intercalée avec une seconde série de bagues, portée par la roue 21. Les bagues intercalées forment des chicanes qui protègent le palier d'une pollution venant du rotor 12 et, inversement, empêchent d'éventuelles fuites de graisse du palier 18.

La roue 21 délimite à sa périphérie une première surface 23 cylindrique radiale, orientée vers la paroi 14 latérale du carter. Par ailleurs, la paroi 14 latérale du carter porte une deuxième surface 24 radiale, orientée vers l'arbre 17. Dans l'exemple de la figure 1, la deuxième surface 24 est formée par une collerette de la paroi 14, faisant saillie vers l'intérieur du carter. Les première et deuxième surfaces 23, 24 radiales ont la forme de bagues, continues ou fragmentées, de diamètres sensiblement identiques. La première surface 23 et la deuxième surface 24 sont décalées l'une par rapport à l'autre d'une première distance 25 selon l'axe A.

Dans l'exemple de la figure 1, le second palier 19 est à roulement à billes. Le palier 19 est monté entre l'arbre 17 et une seconde cage 27 annulaire, fixée au second flasque 16. La seconde cage 27 est également appelée boîtier de palier ou boîtier de roulement. Le flasque 16 comporte un alésage 28 traversant, orienté selon l'axe A, par lequel l'arbre 17 fait saillie hors du carter 13. Une paroi 29 interne de l'alésage 28 est au contact d'une paroi 30 latérale externe de la seconde cage 27. La paroi 30 a une forme sensiblement cylindrique.

Le moteur 10 comporte également un moyen 31 amovible de blocage axial de l'arbre 17 de sortie par rapport au carter 13. Par exemple, la seconde cage 27 est rendue solidaire du flasque 16 par des vis 31 orientées axialement. Les vis 31 maintiennent en contact une face extérieure du flasque 16 et une bride 32 extérieure de la seconde cage 27. La bride 32 s'étend radialement par rapport à la paroi 30 latérale et a par exemple la forme d'une couronne ou de pattes disposées en étoile.

De manière connue, la seconde cage 27 est munie d'encoches (non représentées) aptes à coopérer avec un extracteur à griffes. En variante préférée, la seconde cage 27 comprend au moins deux trous taraudés aptes à coopérer avec un extracteur à tiges filetées.

Un joint 33 annulaire, traversé par l'arbre 17, est solidaire du flasque 16 et disposé contre une face 34 intérieure du flasque. Le joint 33 est également appelé couvercle déflecteur. Une saillie 35 du joint 33 s'étend axialement et est insérée dans l'alésage 28.

Un déflecteur 36, solidaire de l'arbre 17, est disposé entre le rotor 12 et le second palier 19. Le déflecteur a la forme d'une couronne et porte une série de bagues 37 coaxiales selon l'axe A, lesdites bagues étant orientées vers le second palier 19. Le joint 33 porte une série de bagues 38 coaxiales selon l'axe A, lesdites bagues étant orientées vers le rotor. Les bagues 37 sont intercalées avec les bagues 38 pour former des chicanes analogues au dispositif 22 décrit ci-dessus. Lesdites chicanes isolent le second palier 19 du rotor 12.

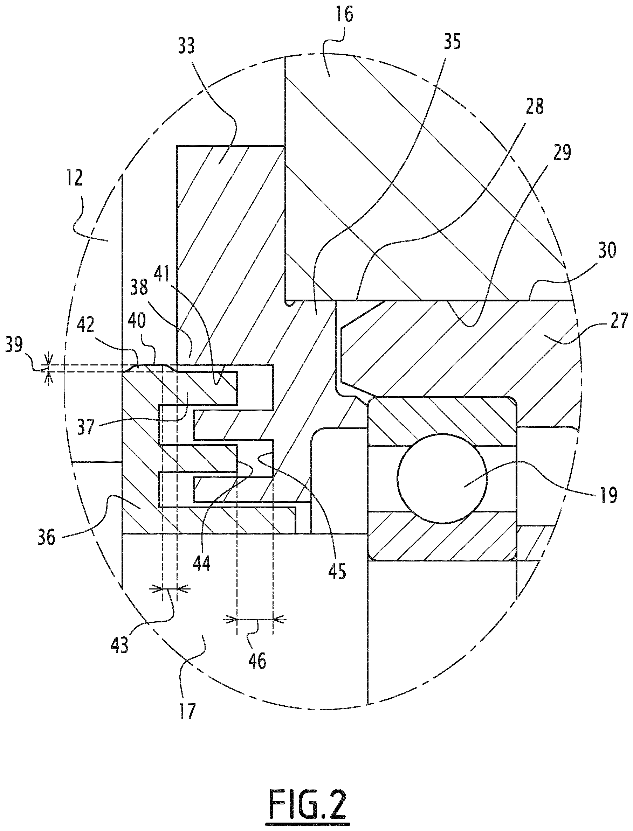

Une vue de détail du déflecteur 36 et du joint 33 est visible à la figure 2. Afin de permettre la rotation du déflecteur 36 par rapport au joint 33 lors du fonctionnement du moteur, un jeu 39 radial est ménagé entre les bagues 37 du déflecteur et les bagues 38 du joint.

Une troisième surface 40 radiale est portée par une bague 37 extérieure du déflecteur 36. Une quatrième surface 41 radiale est portée par une bague 38 du joint 33. Les troisième et quatrième surfaces 40,41 radiales ont la forme de bagues, continues ou fragmentées, de diamètres sensiblement identiques. Dans l'exemple de la figure 2, la troisième surface 40 est délimitée au sommet d'un bourrelet 42 radial du déflecteur 36. Le bourrelet 42 a une épaisseur égale au jeu 39 radial entre le déflecteur 36 et le joint 33.

Les troisième et quatrième surfaces 40, 41 sont orientées en vis-à-vis l'une de l'autre et décalées l'une par rapport à l'autre d'une deuxième distance 43 selon l'axe A. Préférentiellement, la deuxième distance 43 est sensiblement égale à la première distance 25 entre les première et deuxième surfaces 23, 24 radiales de la roue 21 et de la paroi 14 du carter.

La paroi 30 latérale externe de la cage 27 et la paroi 29 interne de l'alésage 28 sont configurées et dimensionnées de sorte à coulisser l'une contre l'autre lors d'une course de l'arbre 17 sur la deuxième distance 43 selon l'axe A, au départ de la position de fonctionnement. En particulier, les parois 29, 30 sont aptes à coulisser l'une contre l'autre sur une longueur au moins égale à la deuxième distance 43.

De même, les parois 29, 30 sont aptes à coulisser l'une contre l'autre sur une longueur au moins égale à la première distance 25 entre les première et deuxième surfaces 23, 24 radiales de la roue 21 et de la paroi 14 du carter.

Le déflecteur 36 délimite en outre une surface 44 frontale, orientée vers le joint 33, transversalement à l'axe A. Ladite surface 44 frontale fait face à une surface 45 de butée, délimitée par le joint 33 et sensiblement parallèle à la surface 44. En position de fonctionnement du moteur, la surface 44 frontale est séparée de la surface 45 de butée par une troisième distance 46 selon l'axe A.

La première surface 23 radiale de la roue 21 et la deuxième surface 24 radiale de la paroi 14 latérale du carter sont configurées de sorte à être au contact l'une de l'autre lorsque les surfaces 44, 45 sont en butée. De même, la troisième surface 40 radiale du déflecteur 36 et la quatrième surface 41 radiale du joint 33 sont configurées de sorte à être au contact l'une de l'autre lorsque les surfaces 44, 45 sont en butée. La troisième distance 46 est donc supérieure à la première distance 25 et à la deuxième distance 43.

Un procédé de démontage du palier 18 et/ou du palier 19 du moteur 10, selon un premier mode de réalisation de l'invention, va maintenant être décrit. Ce procédé permet de démonter les paliers 18, 19 sans démonter le rotor 12 du carter 13.

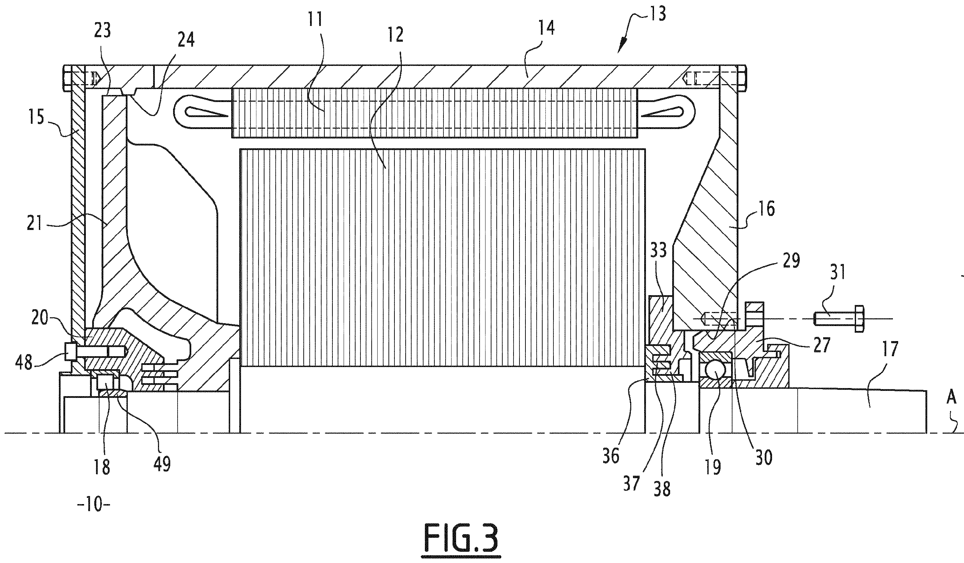

Les vis 31 reliant la seconde cage 27 au flasque 16 sont tout d'abord démontées. L'arbre 17 est ensuite déplacé selon l'axe A, d'une distance supérieure à la première distance 25 et à la deuxième distance 43. Préférentiellement, l'arbre 17 est déplacé de la troisième distance 46, de manière à faire buter la surface 44 du déflecteur 36 contre la surface 45 du joint 33. La configuration du moteur 10 alors obtenue est représentée à la figure 3.

Sur la course 46 de l'arbre 17 comprise entre la position de fonctionnement du moteur et la mise en butée des surfaces 44, 45, un coulissement de la paroi 30 latérale externe du boîtier 27, contre la paroi 29 interne de l'alésage 28, guide ledit arbre 17 en translation selon l'axe A.

La mise en contact des première et deuxième 23, 24 surfaces radiales et des troisième et quatrième 40, 41 surfaces radiales permet le blocage radial de l'arbre 17 et du rotor 12 par rapport au carter 13. Il est donc possible de démonter les paliers 18, 19 sans modifier les positions coaxiales de l'arbre 17 et du carter 13.

Une étape suivante du procédé est l'extraction de la seconde cage 27 par coulissement le long de l'arbre 17 vers l'extérieur du carter 13, par exemple au moyen d'un extracteur à griffes. En variante préférée, la seconde cage 27 est extraite avec un extracteur à tiges filetées. Dans ce cas, la seconde cage 27 comprend des trous taraudés coopérant avec l'extracteur à tiges filetées.

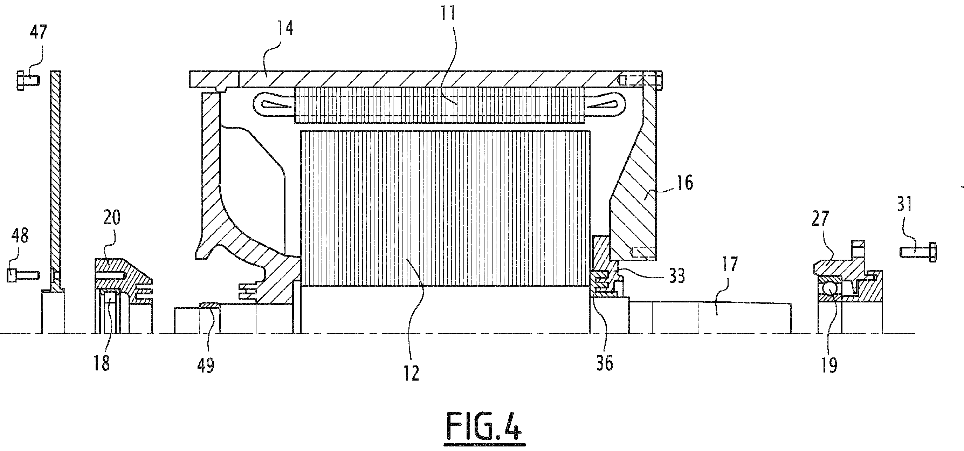

Le second palier 19 à billes est entraîné par la seconde cage 27 hors du carter 13. La configuration du moteur 10 alors obtenue est représentée en partie droite de la figure 4. Le palier 19 peut ensuite être démonté pour entretien ou remplacement.

Avant, après ou simultanément à l'extraction du second palier 19, il est possible d'extraire le premier palier 18 de la manière suivante : comme illustré sur la figure 4, le premier flasque 15 est d'abord démonté, par exemple par dévissage de vis 47 reliant ledit flasque à la paroi 14 latérale du carter 13 et de vis 48 reliant le flasque 15 à la première cage 20. La première cage 20 est ensuite extraite par coulissement le long de l'arbre 17 vers l'extérieur du carter 13. Le premier palier 18 à rouleaux est entraîné par la première cage 20, à l'exception d'une bague 49 intérieure de roulement, montée en force sur l'arbre 17. La configuration du moteur 10 alors obtenue est représentée en partie gauche de la figure 4. La bague 49 peut ensuite être extraite de l'arbre 17, par exemple au moyen d'un extracteur à griffes. De même, le palier 18 peut alors être démonté pour entretien ou remplacement.

Selon un deuxième mode de réalisation de l'invention, la saillie interne formant la deuxième surface radiale 24 est remplacée par une série de trous taraudés (non représentés) aménagés radialement dans la paroi latérale 14 du carter. De préférence, la paroi 14 comporte au moins trois trous taraudés, répartis angulairement de manière sensiblement régulière autour de l'axe A.

Selon ledit deuxième mode de réalisation de l'invention, après la mise en butée des surfaces 44, 45 comme décrit ci-dessus, des vis (non représentées) sont vissées dans les trous taraudés jusqu'à entrer en contact avec la première surface 23 radiale de la roue 21. Le blocage radial du rotor par rapport au carter est ainsi assuré et les étapes de démontage des paliers 18, 19, décrites ci-dessus, peuvent être réalisées.

Suite à un entretien ou un remplacement des paliers 18, 19, les procédés de démontage décrits ci-dessus peuvent être suivis d'étapes de remontage qui se déroulent de manière inverse au démontage : un palier 18, 19 et une cage 20, 27 sont installés sur l'arbre 17, avec ensuite un remontage éventuel du premier flasque 15 ; puis, dans le deuxième mode de réalisation décrit ci-dessus, les vis en contact avec la surface 23 sont dévissées pour libérer ladite surface 23 ; puis l'arbre 17 est translaté selon l'axe A de manière à remettre l'ensemble rotor 12 / stator 11 en position de fonctionnement. Ladite translation de l'arbre écarte axialement les troisième et quatrième surfaces 40, 41 radiales et rétablit le jeu 39 entre le déflecteur 36 et le joint 33. Dans le premier mode de réalisation décrit ci-dessus, ladite translation de l'arbre 17 écarte également les première et deuxième surfaces 23, 24 radiales et rétablit un jeu radial entre la roue 21 et la paroi 14 du carter. Les vis 31 sont ensuite remontées pour solidariser la seconde cage 27 et le flasque 16, ce qui rétablit un blocage axial de l'arbre 17.

## Revendications

1. Moteur (10) électrique du type comportant :
- un carter (13) disposé selon un axe principal (A), comprenant : une paroi (14) latérale ; et une première (15) et une seconde (16) parois d'extrémité, également appelées premier (15) et second (16) flasques, disposées transversalement à l'axe principal (A),
- un rotor (12) et un stator (11) formant un ensemble rotor- stator, le stator (11) étant solidaire du carter (13),
- un arbre (17) de sortie solidaire du rotor (12), coaxial au carter (13) selon l'axe principal (A), et
- un premier (18) et un second (19) paliers, configurés pour maintenir l'arbre (17) de sortie libre en rotation par rapport au carter (13) autour de l'axe principal (A), chacun des premier (18) et second (19) paliers étant monté entre l'arbre (17) de sortie et, respectivement, une première cage annulaire (20) fixée à la première paroi d'extrémité (15), et une seconde cage annulaire (27) fixée à la seconde paroi d'extrémité (16) ;
le moteur (10) électrique étant **caractérisé en ce que** :
- il comprend une première (23), une deuxième (24), une troisième (40) et une quatrième (41) surfaces radiales ; lesdites première (23), deuxième (24), troisième (40) et quatrième (41) surfaces radiales ayant la forme de bagues (37, 38), continues ou fragmentées, les première (23) et deuxième (24) surfaces radiales étant de diamètres identiques ; les troisième (40) et quatrième (41) surfaces radiales étant de diamètres identiques ;
- la deuxième surface radiale (24) est portée par la paroi (14) latérale du carter (13) et la première surface radiale (23) est portée par une roue (21) solidaire de l'arbre (17) de sortie et disposée selon l'axe principal (A), entre le rotor (12) et la première cage annulaire (20) ;
- la troisième surface radiale (40) est portée par une première bague (37) extérieure d'un déflecteur (36) solidaire de l'arbre (17) de sortie, ladite première bague (37) étant disposée selon l'axe principal (A) entre le rotor (12) et le second palier (19) ; et la quatrième surface radiale (41) est portée par une deuxième bague (38) d'un joint (33) solidaire de la seconde paroi d'extrémité (16) du carter (13) et disposée selon l'axe principal (A) entre le rotor (12) et ledit second palier (19), l'une au moins de la troisième (40) ou de la quatrième (41) surface formant une saillie radiale par rapport à la première (37) ou deuxième (38) bague portant ladite troisième (40) ou quatrième (41) surface ;
- dans une position de fonctionnement de l'ensemble rotor-stator, les première (23) et deuxième (24) surfaces radiales ainsi que les troisième (40) et quatrième (41) surfaces radiales sont écartées (25, 43) l'une de l'autre selon l'axe principal (A) ;
- l'arbre (17) de sortie comporte un moyen (29, 30) de guidage par rapport au carter (13) sur une course (25, 43) en translation selon l'axe principal (A) ; et
- le moteur (10) électrique est configuré de sorte qu'un déplacement de l'arbre (17) de sortie sur ladite course (25, 43) en translation selon l'axe principal (A), guidé par ledit moyen (29, 30) de guidage, amène les première (23) et deuxième (24) surfaces radiales ainsi que les troisième (40) et quatrième (41) surfaces radiales au contact l'une de l'autre, de sorte à retenir radialement le rotor (12) par rapport au carter (13).

2. Moteur électrique selon la revendication 1, comportant un moyen (31) de blocage axial de l'arbre (17) de sortie par rapport au carter (13).

3. Moteur électrique selon la revendication 1 ou la revendication 2, tel que :
- le rotor (12) comprend une cinquième (44) surface disposée transversalement à l'axe principal (A),
- le carter (13) comprend une sixième (45) surface disposée transversalement à l'axe principal (A),
le moteur (10) électrique étant configuré de sorte que les première (23) et deuxième (24) surfaces radiales ainsi que les troisième (40) et quatrième (41) surfaces radiales soient au contact l'une de l'autre lorsque les cinquième (44) et sixième (45) surfaces sont en butée.

4. Procédé de démontage et remontage d'un palier (18, 19) d'un moteur (10) électrique selon l'une des revendications 2 ou 3, ledit procédé comprenant les étapes suivantes :
- démontage du moyen (31) de blocage axial de l'arbre (17) de sortie par rapport au carter (13), puis
- à partir de la position de fonctionnement de l'ensemble rotor-stator, déplacement de l'arbre (17) de sortie sur la course (25, 43) en translation selon l'axe (A) principal, guidé par le moyen (29, 30) de guidage de l'arbre (17) de sortie par rapport au carter (13), de manière à mettre en contact les première (23) et deuxième (24) surfaces radiales ainsi que les troisième (40) et quatrième (41) surfaces radiales pour bloquer radialement le rotor (12) par rapport au carter (13), puis
- extraction, vers l'extérieur du carter (13), du premier (18) et/ou du second (19) palier, par déplacement axial du ou desdits paliers (18,19) le long de l'arbre (17) de sortie, sans démonter le rotor (12) du carter (13) et sans modifier les positions coaxiales de l'arbre (17) de sortie et du carter (13).

5. Procédé selon la revendication 4 d'un moteur selon la revendication 3, tel que le déplacement de l'arbre (17) de sortie par rapport au carter (13), sur la course en translation selon l'axe principal (A), vient mettre en butée la cinquième (44) et la sixième (45) surfaces, de sorte à bloquer axialement le rotor (12) par rapport au carter (13).

6. Procédé selon la revendication 4 ou la revendication 5, comprenant l'extraction du premier palier (18) vers l'extérieur du carter (13) ; et comprenant au préalable un démontage de la première paroi d'extrémité (15) par rapport à la paroi latérale (14) du carter (13).

7. Procédé selon l'une des revendications 4 à 6, comprenant ensuite les étapes suivantes :
- montage d'un palier (18,19) sur l'arbre (17) de sortie à l'emplacement du ou de chaque palier 2. (18,19) extrait, puis
- déplacement de l'arbre (17) de sortie sur la course en translation selon l'axe principal (A), de manière à écarter l'une de l'autre les première (23) et deuxième (24) surfaces et les troisième (40) et quatrième (41) surfaces, et à mettre l'ensemble rotor (12)-stator (11) en position de fonctionnement, puis
- montage du moyen (31) de blocage axial de l'arbre (17) de sortie par rapport au carter (13).

## Patentansprüche

1. Elektromotor (10) eines Typs, der Folgendes umfasst:
- ein Gehäuse (13), das entlang einer Hauptachse (A) angeordnet ist, umfassend: eine Seitenwand (14); und eine erste (15) und eine zweite (16) Stirnwand, die auch als erster (15) und zweiter (16) Flansch bezeichnet werden, die quer zu der Hauptachse (A) angeordnet sind,
- einen Rotor (12) und einen Stator (11), die eine Rotor-Stator-Einheit bilden, wobei der Stator (11) fest mit dem Gehäuse (13) verbunden ist,
- eine fest mit dem Rotor (12) verbundene Abtriebswelle (17), koaxial entlang der Hauptachse (A) zu dem Gehäuse (13), und
- ein erstes (18) und ein zweites (19) Lager, die konfiguriert sind, um Abtriebswelle (17) eine freie Drehung in Bezug auf das Gehäuse (13) um die Hauptachse (A) zu ermöglichen, wobei jedes von dem ersten (18) und dem zweiten (19) Lager zwischen der Abtriebswelle (17) und einem ersten ringförmigen Käfig (20), der an der ersten Stirnwand (15) befestigt ist, bzw. einem zweiten ringförmigen Käfig (27), der an der zweiten Stirnwand (16) befestigt ist, montiert ist;
wobei der Elektromotor **dadurch gekennzeichnet ist, dass**:
er eine erste (23), eine zweite (24), eine dritte (40) und eine vierte (41) radiale Fläche umfasst; wobei die erste (23), die zweite (24), die dritte (40) und die vierte (41)
radiale Fläche, die die Form von Ringen (37, 38) aufweisen, durchgehend oder fragmentiert sind, wobei die erste (23) und die zweite (24) radiale Fläche identische Durchmesser aufweisen; die dritte (40) und die vierte (41) radiale Fläche identische Durchmesser aufweisen;
- die zweite radiale Fläche (24) von der Seitenwand (14) des Gehäuses (13) getragen wird,
und die erste radiale Fläche (23) von einem Rad (21) getragen wird, das fest mit der Abtriebswelle (17) verbunden ist und zwischen dem Rotor (12) und dem ersten ringförmigen Käfig (20) entlang der Hauptachse (A) angeordnet ist;
- die dritte radiale Fläche (40) von einem ersten äußeren Ring (37) eines Deflektors (36) getragen wird, der fest mit der Abtriebswelle (17) verbunden ist, wobei der erste Ring (37) zwischen dem Rotor (12) und dem zweiten Lager (19) entlang der Hauptachse (A) angeordnet ist; und die vierte radiale Fläche (41) von einem zweiten Ring (38) einer Dichtung (33) getragen wird, die mit der zweiten Stirnwand (16) des Gehäuses (13) fest verbunden und entlang der Hauptachse (A) zwischen dem Rotor (12) und dem zweiten Lager (19) angeordnet ist, wobei mindestens eine von der dritten (40) oder der vierten (41) Fläche einen radialen Vorsprung in Bezug auf den ersten (37) oder den zweiten (38) Ring bildet, der die dritte (40) oder vierte (41) Fläche trägt;
- in einer Betriebsposition der Rotor-Stator-Anordnung die erste (23) und zweite (24) radiale Fläche sowie die dritte (40) und vierte (41) radiale Fläche entlang der Hauptachse (A) voneinander beabstandet (25, 43) sind;
- die Abtriebswelle (17) eine Führungseinrichtung (29, 30) in Bezug auf das Gehäuse (13) über einen Hub (25, 43) in Translation entlang der Hauptachse (A) aufweist; und
- wobei der Elektromotor (10)
konfiguriert ist, so dass eine Bewegung der Abtriebswelle (17) auf dem Hub (25, 43) in Translation entlang der Hauptachse (A), geführt durch die Führungseinrichtung (29, 30), die erste (23) und zweite (24) radiale Fläche sowie die dritte (40) und vierte (41) radiale Fläche in Kontakt miteinander bringt, sodass der Rotor (12) in Bezug auf das Gehäuse (13) radial gehalten wird.

2. Elektromotor nach Anspruch 1, umfassend eine axiale Arretiereinrichtung (31) der Abtriebswelle (17) in Bezug auf das Gehäuse (13).

3. Elektromotor nach Anspruch 1 oder Anspruch 2, wobei:
- der Rotor (12) eine fünfte (44) Fläche aufweist, die quer zu der Hauptachse (A) angeordnet ist,
- das Gehäuse (13) eine sechste (45) Fläche aufweist, die quer zu der Hauptachse (A) angeordnet ist
wobei der Elektromotor (10) konfiguriert ist, sodass die erste (23) und die zweite (24) radiale Fläche sowie die dritte (40) und die vierte (41) radiale Fläche einander berühren, wenn die fünfte (44) und die sechste (45) Fläche aneinander anliegen.

4. Verfahren zum Ausbau und Wiedereinbau eines Lagers (18, 19) eines Elektromotors (10)
nach einem der Ansprüche 2 oder 3, das Verfahren umfassend die folgenden Schritte:
- Ausbauen der axialen Arretiereinrichtung (31) der Abtriebswelle (17) in Bezug auf das Gehäuse (13), dann
- ausgehend von der Betriebsposition der Rotor-Stator-Einheit, Bewegen der Abtriebswelle (17) über den Hub (25, 43) in Translation entlang der Hauptachse (A), geführt durch die Führungseinrichtung (29, 30) der Abtriebswelle (17) in Bezug auf das Gehäuse (13), sodass die erste (23) und die zweite (24) radiale Fläche sowie die dritte (40) und vierte (41) radiale Fläche in Kontakt gebracht werden, um den Rotor (12) in Bezug auf das Gehäuse (13) radial zu arretieren, dann
- Herausziehen des ersten (18) und/oder des zweiten (19) Lagers aus dem Gehäuse (13) durch axiales Verschieben des Lagers oder der Lager (18, 19) entlang der Abtriebswelle (17), ohne den Rotor (12) aus dem Gehäuse (13) auszubauen und ohne die koaxialen Positionen der Abtriebswelle (17) und des Gehäuses (13) zu verändern.

5. Verfahren nach Anspruch 4 eines Motors nach Anspruch 3, derart, dass die Bewegung der Abtriebswelle (17) in Bezug auf das Gehäuse (13) über den Translationshub entlang der Hauptachse (A) die fünfte (44) und die sechste (45) Fläche in Anschlag bringt, sodass der Rotor (12) in Bezug auf das Gehäuse (13) axial blockiert wird.

6. Verfahren nach Anspruch 4 oder Anspruch 5, umfassend das Herausziehen des ersten Lagers (18) aus dem Gehäuse (13); und zuvor umfassend ein Ausbauen der ersten Stirnwand (15) in Bezug auf die Seitenwand (14) des Gehäuses (13).

7. Verfahren nach einem der Ansprüche 4 bis 6, ferner umfassend die folgenden Schritte:
- Einbauen eines Lagers (18, 19) auf der Abtriebswelle (17) an der Stelle des oder jedes herausgezogenen Lagers (18, 19), dann
- Bewegen der Abtriebswelle (17) auf dem Translationshub entlang der Hauptachse (A), um die erste (23) und die zweite (24) Fläche und die dritte (40) und die vierte (41) Fläche voneinander wegzubewegen und Bringen der Einheit aus Rotor (12) und Stator (11) in Betriebsposition, dann
- Einbauen der axialen Arretiereinrichtung (31) der Abtriebswelle (17) in Bezug auf das Gehäuse (13).

## Claims

1. Electric motor (10) of the type comprising:
- a casing (13) arranged along a main axis (A), comprising: a side wall (14); and first (15) and second (16) end walls, also called first (15) and second (16) flanges, arranged transversely to the main axis (A)
- a rotor (12) and a stator (11) forming a rotor-stator assembly, the stator (11) being integral with the casing (13),
- an output shaft (17) integral with the rotor (12), coaxial with the casing (13) along the main axis (A), and
- a first (18) and a second (19) bearing, configured to keep the output shaft (17) free to rotate with respect to the casing (13) about the main axis (A), each of the first (18) and second (19) bearings being mounted (18) and second (19) bearings being mounted between the output shaft (17) and, respectively, a first annular cage (20) attached to the first end wall (15), and a second annular cage (27) attached to the second end wall (16);
the electric motor being **characterised in that**:
it comprises a first (23), a second (24), a third (40) and a fourth (41) radial surface; said first (23), second (24), third (40) and fourth (41)
radial surfaces having the form of rings (37, 38), continuous or fragmented, the first (23) and second (24) radial surfaces being of identical diameters; the third (40) and fourth (41) radial surfaces being of identical diameters;
- the second radial surface (24) is supported by the side wall (14) of the housing (13) and the first radial surface (23) is carried by an impeller (21) integral with the output shaft (17) and arranged along the main axis (A) between the rotor (12) and the first annular cage (20);
- the third radial surface (40) is carried by a first outer ring (37) of a deflector (36) integral with the output shaft (17), said first ring (37)
being arranged along the main axis (A) between the rotor (12) and the second bearing (19); and the fourth radial surface (41) is carried by a second ring (38) of a seal (33) integral with the second end wall (16) of the casing (13) and arranged along the main axis (A) between the rotor (12) and said second bearing (19), at least one of the third (40) or fourth (41) surface forming a radial projection with respect to the first (37) or second (38) ring bearing said third (40) or fourth (41) surface;
- in an operating position of the rotor-stator assembly, the first (23) and second (24) radial surfaces as well as the third (40) and fourth (41) radial surfaces are spaced apart (25, 43) along the main axis (A);
- the output shaft (17) has means (29, 30) for guiding it relative to the casing (13) translationally through a stroke (25, 43) along the main axis (A); and
- the electric motor (10)
is configured so that a movement of the output shaft (17) translationally through said stroke (25, 43) along the main axis (A), guided by said guiding means (29, 30),
brings the first (23) and second (24) radial surfaces and the third (40) and fourth (41) radial surfaces into contact with each other, so as to radially retain the rotor (12) relative to the casing (13).

2. The electric motor as claimed in claim 1, comprising means (31) for axially locking the output shaft (17) relative to the casing (13).

3. The electric motor as claimed in claim 1 or claim 2, such that:
- the rotor (12) comprises a fifth surface (44) arranged transversely to the main axis (A),
- the casing (13) comprises a sixth surface (45) arranged transversely to the main axis (A),
the electric motor (10) being configured so that the first (23) and second (24) radial surfaces and the third (40) and fourth (41) radial surfaces contact each other when the fifth (44) and sixth (45) surfaces are in abutment.

4. A method of dismantling and reassembling a bearing (18, 19) of an electric motor (10) according to one of claims 2 or 3, said method comprising the following steps:
- disassembling the means (31) for axially locking the output shaft (17) relative to the casing (13), then
- from the operating position of the rotor-stator assembly, moving the output shaft (17) translationally through the stroke (25, 43) along the main axis (A), guided by the means (29, 30) for guiding the output shaft (17) relative to the casing (13), so as to bring the first (23) and second (24) radial surfaces as well as the third (40) and fourth (41) radial surfaces into contact in order to radially block the rotor (12) with respect to the casing (13), then
- extracting, outward from the casing (13), the first (18) and/or second (19) bearing, by axial movement of said bearing(s) (18, 19) along the output shaft (17), without disassembling the rotor (12) from the casing (13) and without modifying the coaxial positions of the output shaft (17) and the casing (13)

5. The method according to claim 4 of a motor according to claim 3, such that the movement of the output shaft (17) relative to the casing (13), translationally through the stroke along the main axis (A), brings the fifth (44) and sixth (45) surfaces into abutment, so as to axially block the rotor (12) relative to the casing (13).

6. - The method according to claim 4 or claim 5, comprising extracting the first bearing (18) outwardly from the casing (13); and previously disassembling the first end wall (15) from the side wall (14) of the casing (13).

7. - The method according to any of claims 4 to 6, thereafter comprising the following steps:
- assembling a bearing (18, 19) onto the output shaft (17) at the location of the or each extracted bearing (18, 19), then
- moving the output shaft (17) translationally through the stroke along the main axis (A), so that the first (23) and second (24) surfaces and the third (40) and fourth (41) surfaces are moved away from each other and the rotor (12)-stator (11) assembly is brought into the operating position, then
- assembling the means (31) for axially locking the output shaft (17) relative to the casing (13).
